# EUROPEAN PATENT SPECIFICATION

(11) **EP 0 372 741 B1**
(45) Date of publication and mention of the grant of the patent: **17.01.1996**
(21) Application number: 89311988.3
(22) Date of filing: 20.11.1989
(51) Int. Cl.: B60R 25/04

(54) **Security system for a vehicle**
Sicherheitssystem für Fahrzeuge
Système de sécurité pour véhicule

(30) Priority: 02.12.1988 GB 8828244
(43) Date of publication of application: 13.06.1990
(73) Proprietor: ROVER GROUP LIMITED, Bickenhill Birmingham B37 7HQ (GB)
(72) Inventor: Kershaw, Terence Jack, Solihull West Midlands B92 9QD (GB); Wright, Darren, Tamworth Staffs (GB); Ashworth, Andrew, Solihull West Midlands B93 9NH (GB)
(74) Representative: Wilson, Alan Stuart

(56) References cited:
- EP-A- 0 105 774
- FR-A- 2 545 632
- FR-A- 2 613 993
- FR-A- 2 646 642
- US-A- 4 792 792

## Description

The invention relates to security systems for vehicles.

It is normal practice to provide road vehicles with door locks, a lockable ignition switch (or equivalent for a diesel engine) and a lockable steering mechanism, the last two locks normally being combined. These features do not protect a vehicle completely against a determined thief who wishes to drive away the vehicle or remove contents or fittings from the vehicle. With a view to resisting unauthorised access to vehicles, some vehicles are fitted with alarms which give warning when a vehicle has been interfered with or with devices which resist entry to or operation of the vehicle. Systems incorporating security features going beyond the conventional door lock, starter/ignition switch lock and steering lock are known as security systems while the more basic security features common to virtually all vehicles are not normally classified as security systems.

In devising or evaluating a security system it is useful to consider the ways in which a thief would intend to by-pass or neutralise a security system because the degree of difficulty for the thief is a measure of the effectiveness of the security system. Some forms of security systems inhibit supply of electrical power to a vehicle ignition system, thus preventing the vehicle from being driven off. One way for a thief to overcome such a system is to hot-wire the vehicle, that is to provide an independent source of power supply to the ignition system. This can require nothing more than by-passing the security device. A security system which can not be by-passed by hot-wiring clearly constitutes a step forward.

FR-A-2613993, which forms the preamble of claim 1, and FR-A-2545632 each disclose a vehicle security system in which a signal from a hand held transmitter is received and checked by a first microprocessor unit, which, if the signal is correct, sends a signal to a control unit which checks that signal and, if it is correct, enables a function of the vehicle.

An object of the invention is to provide a vehicle with an improved form of security system.

According to the present invention there is provided a security system for a vehicle powered by an internal combustion engine having a vital function, the system comprising a signal unit which can be operated by an authorised user to send a coded vital function enable signal and a first electronic control unit (hereinafter referred to as first ECU) for generating a control signal which drives the vital function, characterized in that the system further comprises a second electronic control unit, hereinafter referred to as second ECU, and in that the first ECU and the second ECU form a mutually compatible pair in that the first ECU is, upon receipt of the coded vital function enable signal, not operative to generate the control signal until a parity check has been effected between the first ECU and the second ECU.

The first ECU may be an engine ECU.

The vital function is normally the generation of appropriately timed and routed sparks for a spark ignition engine. However, for a compression ignition engine or for a fuel injection spark ignition engine, the vital function controlled may be the supply of and metering of fuel.

The enable signal may be a mutli-bit binary signal which may be generated in a variety of ways. For example, it could be generated as a password or number code to be entered from a keyboard; the controls of a trip computer or even a radio or radio cassette player could provide the keyboard for such an operation. Alternatively, an infrared or ultrasonic generator issuing a coded signal may be employed to transmit a suitable signal to the first ECU. An ultra sonic or infra red signal generator may also act as a remote controller for locking and unlocking the vehicle doors.

With such an arrangement, a would be thief is thwarted even if he or she introduces a replacement ECU which is pre-enabled or for which the thief can generate the correct enable signal.

The second ECU may for example be incorporated in an audio entertainment unit or in a vehicle trip computer or may comprise a security ECU housed in an inaccessible position within the vehicle.

For even greater security, more than two ECUs may be matched together by parity coding in a mutually compatible group.

As service backup for vehicles fitted with a security system of this nature, interrogation of compatibility codes and setting of a compatible code in any replacement ECU or code checking means which is needed during the life of a vehicle should be possible but interrogation and code setting should be password or similarly protected. For example, passwords could be incorporated within immobile diagnostic equipment located in ECU or code checking means which is needed during the life of a vehicle should be possible but interrogation and code setting should be password or similarly protected. For example, passwords could be incorporated within immobile diagnostic equipment located in secure service locations or they could be known to only a small number of carefully security screened personnel. A combination of passwords known to personnel and stored in diagnostic equipment would provide even greater overall security for the system, particularly if each diagnostic equipment requires for operation a different password known only to a very small number of personnel with high security clearance. The system may also respond to a master password known only to the vehicle manufacturer.

If a potential thief could acquire a matched pair or matched group of mutually compatible ECUs, he would be able to operate the vehicle by replacing all of the original ECUs by the new matched group. However, acquiring a matched group would be expensive and as matched groups would not normally be required for regular repair or servicing, their distribution could be prohibited or stringently controlled.

The security system may also incorporate an alarm to be triggered by any of the criteria normally used for triggering an alarm. Examples are physical movement of the vehicle, opening of vehicle doors, infra red detectors and ultra sonic detectors. Typically detection of a feature which could cause an alarm does not trigger the alarm until after a time delay, giving authorised personnel sufficient time to disable the alarm before it is triggered. An alarm signal of this kind may give an audible warning or a flashing light warning as its alarm signal. In conjunction with the present invention, an alarm signal generated in this way may also be fed to the first ECU, disabling the vital function for the engine. With such an arrangement, a potential thief who manages to inhibit the audible or visible alarm signal and to provide the signal normally supplied by an authorised user is still prevented from driving the car unless he can provide the authorised enable signal within the delay period for operation of the alarm.

In a case where the enabling signal is provided by a keyboard input or other direct but inconvenient action by a vehicle user, there may be provision to set or not set a high level of security at the choice of the vehicle user. For example, in stopping and parking a car in a secure garage, the user may have the choice of setting or leaving unset a high level of security or in an alternative system of leaving set or overriding the setting of the security system. The setting or overriding operation may be effected by keying in a simple code immediately before or immediately after switching off the engine. In a further variation, the code keyed in on switching off the vehicle may be the same code as is needed subsequently to re-start the vehicle.

Preferably one of the ECUs includes a storage facility which can not readily be overwritten or erased and which incorporates a unique security code associated with the vehicle.

The unique code could be the vehicle identification number (VIN) which is attriubted to each vehicle on manufacture and is normally marked visibly on the vehicle. As an alternative it could be a registration number installed by a dealer on registration of the vehicle. As a still further alternative it could be a code capable of translation into the VIN or registration number or a code number readily identifiable therewith.

Each dealer should be provided with a diagnostic unit capable of reading and displaying the sorted security code or at least of indicating compatibility when compared with a standard number such as the VIN or registration number when transmitted to the ECU.

Any incompatibility is likely to be indicative of a stolen vehicle, namely one in which the registration number or VIN has been altered to attempt to disguise the identity of the vehicle. This latter arrangement does not directly prevent or inhibit stealing of a vehicle but it diminishes the value of a vehicle which has been stolen.

With all of the arrangements thus far described, it would still be possible for a thief to obtain a scrap vehicle, remove all of the ECUs, steal a vehicle of the same type and give the stolen vehicle the identity of the scrap vehicle. To guard against this, insurance companies or other responsible persons should either arrange for destruction of critical ECUs from scrapped vehicles or establish a record of the identification codes of vehicles which have been scrapped. An irregularity would then come to the attention of anyone servicing the vehicle and aware of or having a computer loaded with scrap vehicle data.

The records could also identify written off but subsequently repaired vehicles allowing some check on the history of a used vehicle.

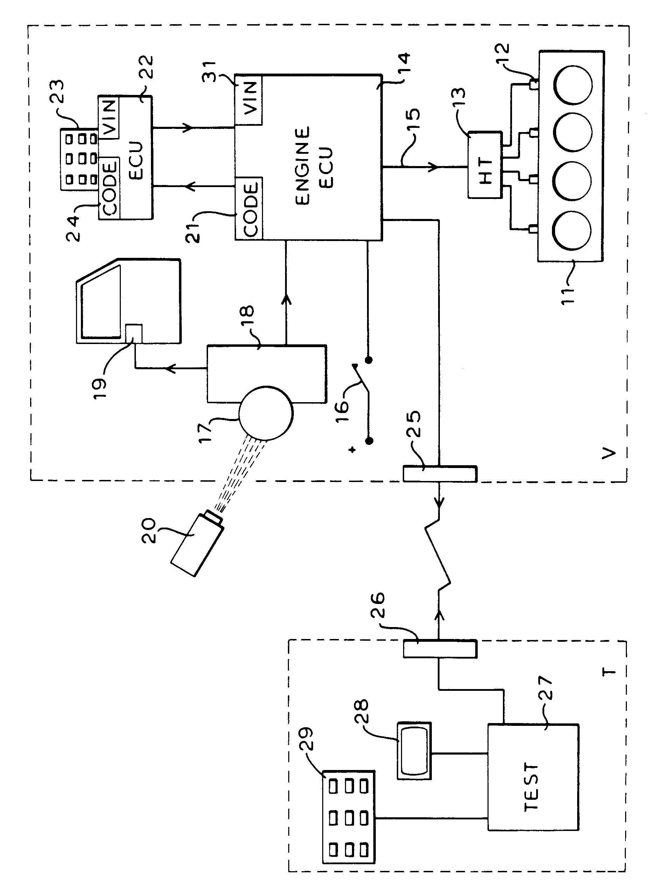

An embodiment of the invention will be described with reference to the accompanying drawing which is a diagrammatic representation of a security system.

Those elements which are carried on the vehicle are depicted within box V intended diagrammatically to represent the vehicle. A further box T represents diagnostic test equipment normally installed in a vehicle servicing facility.

The vehicle is driven by a multi-cylinder spark-ignition internal combustion engine 11 having spark plugs 12 to which ignition sparks are provided from a high tension circuit 13. Operation of the engine is controlled by a first electronic control unit in the form of an engine ECU 14 which receives signals monitoring current engine operating conditions from the engine and from external controls such as accelerator pedal and supplies signals to the engine to control its functions. For example line 15 is shown supplying spark generation and timing signals to the high tension circuitry of the engine. The high tension circuit is such that it can not generate sparks for operation of the engine without the presence of the signal on line 15; ie. the signal does not merely provide a fine tuning signal for spark timing, it actually causes each individual spark to be generated. Spark generation is a vital function for engine operation and the signal on line 15 drives this function in such a way that without the signal the vital function is disabled.

A key operated ignition switch 16 can be operated by a vehicle driver in the usual way to power up the first (engine) ECU 14 when it is desired to start the engine and drive the vehicle away. A start up procedure is initiated on powering up the first (engine) ECU and during this powering up procedure certain checks are carried out by the engine ECU. A total of three such checks will be described.

One check is based on receipt of a correctly coded infrared signal. The vehicle is equipped with an infrared signal receiver 17 and an associated decoder 18. The decoder 18 is such as to decode the signal supplied by an infrared "key" 20, to compare the decoded signal with a stored value in the decoder and issue output signals if but only if there is parity between the received infrared signal and the stored value. Receipt of a valid infrared signal provides an output signal to the door locks 19 to unlock the vehicle doors. The decoded signal itself is also supplied to the first (engine) ECU 14 where it is compared by a parity check with a security code stored at 21 in the first (engine) ECU 14. The enabling output from the parity check may be initiated on unlocking the door.

The first (engine) ECU 14 is also connected to a second ECU 22 which in this case forms part of a trip computer having an operating panel 23. The second ECU 22 has stored in it at 24 a code corresponding to the security code within the first (engine) ECU 14. The start up procedure includes interrogation of the second ECU 22 by the first (engine) ECU 14 to transmit the code from the second ECU 22 to the first engine ECU 14. The codes stored in both ECU 14,22 are compared with each other for compatibility and a spark enable signal is produced only after parity is established.

A further possible check involves use of the control panel 23 of the trip computer 22 as a keyboard. In conjunction with switching on the ignition, a predetermined code has to be keyed in to the trip computer keyboard 23 and compared with the code stored in the first (engine) ECU 14 for parity before a spark signal is enabled.

The arrangement is such that the spark signal is enabled only if all of the security checks which are deployed show parity.

An electrical connector 25 communicating with the first (engine) ECU 14 allows the electronic system of the vehicle to be interconnected with a diagnostic test unit T. This unit T also incorporates a connector 26 permitting interconnection to the vehicle. For the purposes of the present invention the diagnostic test unit can be considered as a computer 27 having a display 28 and a keyboard 29. The test unit is used during routine vehicle servicing to check a wide range of functions in the vehicle, most of which are of no significance to the present invention. After interconnecting the test unit and the vehicle, an operator has to identify the vehicle being serviced so that various parameters in the test procedure are set correctly. This identification may conveniently be effected by keying in to the keyboard 29 the vehicle identification number which can be read directly from an inscription on the vehicle. An alternative is to attach the VIN to the vehicle by means of a bar code and to read it with a bar code reader. The VIN is displayed on a screen 28.

The VIN code is also stored at 31 in the first (engine) ECU 14. One test procedure is for the first (engine) ECU 14 to be interrogated by the computer 27 to read out the stored VIN code. This may be displayed alongside the keyed in VIN code for comparison purposes. Alternatively or in addition the computer 27 may be programmed to compare the VIN codes. The VIN code may also be stored in the second ECU 22 in which case this unit is also interrogated.

If there is any disparity in the VIN codes, the operator is alerted to an irregularity. If the irregularity can not be explained by any other means, it is probably an indication that the vehicle has been tampered with, possibly indicating that it is a stolen vehicle with a disguised identity.

Storage of the VIN codes in the ECUs 14,22 is such that effecting changes is not possible by a normal service operative.

However, to cater for replacement of an ECU without introducing an irregularity into VIN codes, the arrangement should be such that password protected access to the VIN codes is permissible, enabling an operator with high security clearance to change or at least inscribe a VIN number into an ECU.

## Claims

1. A security system for a vehicle (V) powered by an internal combustion engine (11) having a vital function (13), the system comprising a signal unit (18, 20, 23) which can be operated by an authorised user to send a coded vital function enable signal and a first electronic control unit (14) for generating a control signal which drives the vital function, **characterized in that** the system further comprises a second electronic control unit (22) and in that the first electronic control unit (14) and the second electronic control unit (22) form a mutually compatible pair in that the first electronic control unit (14) is, upon receipt of the coded vital function enable signal, not operative to generate the control signal until a parity check has been effected between the first electronic control unit (14) and the second electronic control unit (22).

2. A security system as claimed in claim 1, **characterized in that** the parity check is effected between codes stored in the first electronic control unit (14) and in the second electronic control unit (22).

3. A security system as claimed in claim 1, **characterized in that** the parity check is effected between the decoded vital function enable signal and codes stored in the first electronic control unit (14) and in the second electronic control unit (22).

4. A security system as claimed in any one of claims 1 to 3, **characterized in that** the vital function is the generation of appropriately timed and routed sparks for a spark ignition engine (11).

5. A security system as claimed any one of claims 1 to 3, **characterized in that** the vital function controlled is the supply of and/or metering of fuel to the engine.

6. A security system as claimed in any one of claims 1 to 5, **characterized in that** the signal unit (18) is operated by an infrared or ultrasonic generator (20) issuing the coded vital function enable signal.

7. A security system as claimed in any one of the preceding claims, **characterized in that** it also incorporates an alarm.

8. A security system as claimed in claim 7, **characterized in that** an alarm signal generated by triggering the alarm is also fed to the first electronic control unit (14), disabling the vital function for the engine (11).

9. A security system as claimed in any one of the preceding claims, **characterized in that** one of the electronic control units (14, 22) includes a storage facility which can not readily be overwritten or erased and which incorporates a unique security code associated with the vehicle.

10. A security system as claimed in claim 9, **characterized in that** the unique security code is a vehicle identification number (VIN) which is attributed to the vehicle on manufacture and is marked visibly on the vehicle.

11. A system as claimed in claim 9, **characterized in that** the unique security code is a code capable of translation into the vehicle identification number (VIN).

## Patentansprüche

1. Sicherheitssystem für ein Fahrzeug (V) das von einem Verbrennungsmotor (11) mit einer notwendigen Funktion (13) angetrieben wird, wobei das System eine Signaleinheit (18, 20, 23), die von einem befugten Benutzer betrieben werden kann, um ein codiertes Freigabesignal für die notwendige Funktion abzusenden, und eine erste elektronische Steuerungseinheit (14) zum Erzeugen eines Steuerungssignals, das die notwendige Funktion ansteuert, aufweist, dadurch gekennzeichnet, daß das System weiterhin eine zweite elektronische Steuerungseinheit (22) aufweist und daß die erste elektronische Steuerungseinheit (14) und die zweite elektronische Steuerungseinheit (22) ein gegenseitig kompatibles Paar bilden und daß die erste elektronische Steuerungseinheit (14) nach dem Empfangen des codierten Freigabesignals für die notwendige Funktion nicht tätig ist, um das Steuerungssignal zu erzeugen, bis eine Paritätsprüfung zwischen der ersten elektronischen Steuerungseinheit (14) und der zweiten elektronischen Steuerungseinheit (22) durchgeführt worden ist.

2. Sicherheitssystem nach Anspruch 1, dadurch gekennzeichnet, daß die Paritätsprüfung zwischen Codes durchgeführt wird, die in der ersten elektronischen Steuerungseinheit (14) und in der zweiten elektronischen Steuerungseinheit (22) gespeichert sind.

3. Sicherheitssystem nach Anspruch 1, dadurch gekennzeichnet, daß die Paritätsprüffing zwischen dem decodierten Freigabesignal für die notwendige Funktion und Codes durchgeführt wird, die in der ersten elektronischen Steuerungseinheit (14) und in der zweiten elektronischen Steuerungseinheit (22) gespeichert sind.

4. Sicherheitssystem nach einem der Ansprüche 1 bis 3, dadurch gekennzeichnet, daß die notwendige Funktion die Erzeugung in geeigneter Weise zeitlich abgestimmter und geleiteter Funken für einen Ottomotor (11) ist.

5. Sicherheitssystem nach einem der Ansprüche 1 bis 3, dadurch gekennzeichnet, daß die gesteuerte notwendige Funktion die Zufuhr und/oder Dosierung von Brennstoff für den Motor ist.

6. Sicherheitssystem nach einem der Ansprüche 1 bis 5, dadurch gekennzeichnet, daß die Signaleinheit (18) von einem Infrarot- oder Ultraschall-Generator (20) betrieben wird, der das codierte Freigabesignal für die notwendige Funktion abgibt.

7. Sicherheitssystem nach einem der vorhergehenden Ansprüche, dadurch gekennzeichnet, daß es auch einen Alarm enthält.

8. Sicherheitssystem nach Anspruch 7, dadurch gekennzeichnet, daß ein Alarmsignal, das durch Auslösen des Alarms erzeugt wird, ebenfalls der ersten elektronischen Steuerungseinheit (14) zugeführt wird, wodurch die notwendige Funktion für den Motor (11) gesperrt wird.

9. Sicherheitssystem nach einem der vorhergehenden Ansprüche, dadurch gekennzeichnet, daß eine der elektronischen Steuerungseinheiten (14, 22) eine Speichereinrichtung enthält, die nicht ohne weiteres überschrieben oder gelöscht werden kann und die einen einzigartigen, dem Fahrzeug zugeordneten Sicherheitscode enthält.

10. Sicherheitssystem nach Anspruch 9, dadurch gekennzeichnet, daß der einzigartige Sicherheitscode eine Fahrzeugidentifikationsnummer (VIN) ist, die dem Fahrzeug bei der Herstellung zugeordnet wird und an dem Fahrzeug sichtbar markiert wird.

11. Sicherheitssystem nach Anspruch 9, dadurch gekennzeichnet, daß der einzigartige Sicherheitscode ein Code ist, der in die Fahrzeugidentifikationsnummer (VIN) übersetzt werden kann.

## Revendications

1. Système de sécurité pour un véhicule (V) actionné par un moteur à combustion interne (11) ayant une fonction vitale (13), le système comprenant une unité génératrice de signaux (18, 20, 23) qui peut être activée par un utilisateur autorisé pour envoyer un signal codé d'activation de la fonction vitale, et une première unité de commande électronique (14) pour générer un signal de commande qui active la fonction vitale, caractérisé en ce que le système comprend par ailleurs une deuxième unité de commande électronique (22), en ce que la première unité de commande électronique (14) et la deuxième unité de commande électronique (22) forment une paire mutuellement compatible, et en ce que la première unité de commande électronique (14) est, à la réception du signal codé d'activation de la fonction vitale, non opérante pour générer le signal de commande jusqu'à ce qu'un contrôle de parité ait été effectué entre la première unité de commande électronique (14) et la deuxième unité de commande électronique (22).

2. Système de sécurité selon la revendication 1, caractérisé en ce que le contrôle de parité est effectué entre des codes stockés dans la première unité de commande électronique (14) et dans la deuxième unité de commande électronique (22).

3. Système de sécurité selon la revendication 1, caractérisé en ce que le contrôle de parité est effectué entre le signal décodé d'activation de la fonction vitale et des codes stockés dans la première unité de commande électronique (14) et dans la deuxième unité de commande électronique (22).

4. Système de sécurité selon l'une quelconque des revendications 1 à 3, caractérisé en ce que la fonction vitale est la génération d'étincelles synchronisées et acheminées de manière appropriée pour un moteur à allumage par étincelles (11).

5. Système de sécurité selon l'une quelconque des revendications 1 à 3, caractérisé en ce que la fonction vitale commandée est l'alimentation et/ou le dosage de carburant vers le moteur.

6. Système de sécurité selon l'une quelconque des revendications 1 à 5, caractérisé en ce que l'unité génératrice de signaux (18) est activée par un générateur de signaux infrarouges ou ultrasonores (20) délivrant le signal codé d'activation de la fonction vitale.

7. Système de sécurité selon l'une quelconque des revendications précédentes, caractérisé en ce qu'il contient également une alarme.

8. Système de sécurité selon la revendication 7, caractérisé en ce qu'un signal d'alarme généré par déclenchement de l'alarme est également acheminé à la première unité de commande électronique (14), désactivant la fonction vitale pour le moteur (11).

9. Système de sécurité selon l'une quelconque des revendications précédentes, caractérisé en ce que l'une des unités de commande électroniques (14, 22) comprend un dispositif de stockage qui ne peut être aisément écrasé ou effacé et qui contient un code de sécurité unique associé au véhicule.

10. Système de sécurité selon la revendication 9, caractérisé en ce que le code de sécurité unique est un numéro d'identification de véhicule (VIN) qui est attribué au véhicule lors de sa fabrication et qui est marqué visiblement sur le véhicule.

11. Système selon la revendication 9, caractérisé en ce que le code de sécurité unique est un code qui peut être converti en numéro d'identification du véhicule (VIN).
